# EUROPÄISCHE PATENTSCHRIFT

(11) **EP 2 634 393 B1**
(45) Veröffentlichungstag und Bekanntmachung des Hinweises auf die Patenterteilung: **04.10.2017**
(21) Anmeldenummer: 12007015.6
(22) Anmeldetag: 10.10.2012
(51) Int. Cl.: F02B 37/16, F02B 37/18, F02B 37/22, F02D 9/06, F01N 13/10, F02M 26/06, F02M 26/10, F02M 26/16, F02M 26/70

(54) **Funktionsmodul mit einem Abgasturbolader und einem Abgaskrümmer**
Functional module with an exhaust gas turbocharger and an exhaust manifold
Module de fonctionnement doté d'une turbosoufflante de gaz d'échappement et d'un collecteur de gaz d'échappement

(30) Priorität: 01.03.2012 AT 2692012
(43) Veröffentlichungstag der Anmeldung: 04.09.2013
(73) Patentinhaber: MAN Truck & Bus Österreich AG, 4400 Steyr (AT)
(72) Erfinder: Raab, Gottfried, 4320 Perg (AT); Aiginger, Franz, 4407 Dietachdorf (AT); Schatzberger, Thorolf, 4400 Steyr (AT); Stepanek, Pavel, 4400 Steyr (AT)
(74) Vertreter: Liebl, Thomas

(56) Entgegenhaltungen:
- EP-A1- 2 050 940
- EP-A1- 2 206 899
- WO-A1-2007/147513
- WO-A1-2008/076013
- DE-A1- 10 222 919

## Beschreibung

Die vorliegende Erfindung betrifft ein Funktionsmodul mit einem Abgasturbolader und einem Abgaskrümmer für eine turboaufgeladene Brennkraftmaschine in Kraftfahrzeugen gemäß dem Oberbegriff des Patentanspruchs 1.

Bei turboaufgeladenen Brennkraftmaschinen in Kraftfahrzeugen ist es allgemein bekannt, den Abgasturbolader bzw. dessen Abgasturbine sofern baulich möglich unmittelbar an den Abgaskrümmer der Brennkraftmaschine anzubauen, um Wirkungsgradverluste zu vermeiden und im instationären Betrieb ein schnelles Ansprechen des Turboladers sicherzustellen. Auch Einrichtungen zur Ladedruckregelung mittels eines Bypassventils und ggf. zur Abgasrückführung in das Ansaugsystem der Brennkraftmaschine sind üblich, um insbesondere Vorgaben zur Abgasreinigung zu erfüllen. Bei Nutzkraftfahrzeugen werden zudem auch Bremsklappen im Abgassystem zur Erzielung einer verstärkten Motorbremswirkung im Schubbetrieb des Kraftfahrzeugs eingesetzt.

Bekannte turboaufgeladene Brennkraftmaschinen sind zum Beispiel in EP 2 050 940 A und WO 2007/147513 A gezeigt. Die EP 2 050 940 A zeigt einen Abgaskrümmer mit einer Motorbremseinrichtung und einer Abgasrückführeinrichtung. Die WO 2007/147513 A zeigt einen Abgaskrümmer, der mit einer Abgasturbine integriert ausgeführt ist.

Aufgabe der Erfindung ist es, ein Funktionsmodul der gattungsgemäßen Art vorzuschlagen, das fertigungstechnisch günstig und baulich einfach ausgeführt ist.

Diese Aufgabe wird erfindungsgemäß mit den Merkmalen des Patentanspruchs 1 gelöst. Vorteilhafte Ausgestaltungen und Weiterbildungen der Erfindung sind Gegenstand der Unteransprüche.

Erfindungsgemäß wird vorgeschlagen, dass die Bremsklappe der Motorbremseinrichtung, die Bypassklappe der Ladedruckregelung und ggf. das Abgas-Rückführventil der Abgasrückführeinrichtung in ein Funktionsmodul integriert sind. Das erfindungsgemäße Funktionsmodul stellt eine gut handhabbare, kompakte und funktionsintegrierte Montageeinheit dar, die lediglich mit den entsprechenden, elektronischen Steuergeräten zu verbinden ist und die schon vorab relevante Systemdiagnosen ermöglicht bzw. einjustierbar ist. Der Anbau an die Brennkraftmaschine ist dann schnell und problemlos durchführbar.

Dabei ist es besonders vorteilhaft, wenn an das Funktionsmodul die Betätigungseinrichtungen bzw. Aktuatoren (elektrisch und/oder pneumatisch und/oder hydraulisch) der Bremsklappe und/oder der Bypassklappe und ggf. des Rückführventils bereits angebaut sind.

Zur Erzielung einer robusten und unter anderem auch schwingungsresistenten Konstruktion des Funktionsmoduls kann an dem Abgasturbolader eine Stützkonsole vorgesehen sein, die in vorteilhafter Weise zugleich ein Wärmeschutzschild am Abgaskrümmer bildet. Das Wärmeschutzschild vermeidet insbesondere zu hohe Wärmeabstrahlungen und Umgebungstemperaturen im Motorraum des Kraftfahrzeugs und kann wenigstens bereichsweise durch einen isolierenden Luftspalt vom Abgaskrümmer getrennt bzw. beabstandet sein.

Des Weiteren können die Aktuatoren für die Abgasrückführung und die Bremsklappe in Einbaulage des Funktionsmoduls gut zugänglich an dessen Oberseite positioniert und an der Stützkonsole befestigt sein, wodurch Prüf- oder Einstellarbeiten erleichtert werden. Gleiches trifft für den Aktuator für die Ladedrucksteuerung zu, der bevorzugt am Verdichtergehäuse an dessen Oberseite befestigt ist. Im Wesentlichen können dabei sämtliche Aktuatoren in einer einheitlichen Horizontalebene oberhalb der Anschlussflansche des Abgaskrümmers und der Stützkonsole angeordnet sein.

Das Abgas-Rückführventil kann in einer bevorzugten Ausführung durch eine einfache, in beliebige Zwischenstellungen steuerbare Drosselklappe gebildet sein, die in einem an den Abgaskrümmer angeformten Anschlussstutzen für eine Abgas-Rückführleitung angeordnet ist.

Ferner kann in einer fertigungstechnisch günstigen und montagetechnisch einfachen, weiteren Ausgestaltung die Bremsklappe der Motorbremseinrichtung nahe der Abgasturbine des Abgasturboladers in einen Leitungsabschnitt des Abgaskrümmers eingesetzt sein. Die Bremsklappe könnte aber auch direkt innerhalb des Gehäuses der Abgasturbine positioniert werden, was dort jedoch gegebenenfalls gesonderte, konstruktive Umgestaltungen erfordern würde.

Die Bypassklappe für die Ladedruckregelung kann grundsätzlich in den Abgasturbolader in einer die abgehende Ladedruckleitung des Verdichters mit der Abgasturbine verbindenden Bypassleitung angeordnet sein.

In einer gießtechnisch vorteilhaften Weiterbildung der Erfindung können das Gehäuse der Abgasturbine und der Abgaskrümmer jeweils einteilig als Gußteil ausgeführt und über einander zugeordnete Anschlussbereiche, insbesondere Anschlussflansche miteinander verbunden bzw. aneinander befestigt sein, z.B. durch wenigstens eine Schraubverbindung.

Alternativ können das Gehäuse der Abgasturbine und der Abgaskrümmer auch durch ein einteilig, insbesondere materialeinheitlich und/oder einstückig, hergestelltes Bauteil, insbesondere ein Gussbauteil, gebildet sein, insbesondere als ein Gesamtteil in einem Guss hergestellt sein.

Weiter alternativ dazu können das Gehäuse der Abgasturbine und der Abgaskrümmer auch derart zweiteilig zusammengegossen ausgeführt und aneinander befestigt sein, dass die Trennfläche der beiden Teile in etwa entlang der Mittelachse der im Abgaskrümmer integrierten Leitungen liegt. Der Abgaskrümmer wäre dann zweischalig mit einer in das Gehäuse der Abgasturbine reichenden, ebenen Trennfläche hergestellt. Die beiden Teile können dann zum Beispiel miteinander verschraubt werden oder ggf. auch miteinander verschweißt sein.

Der Abgaskrümmer kann ferner einteilig bzw. einstückig ausgebildet sein, z.B. als ein einteiliges Gussteil ausgebildet und hergestellt sein. Alternativ dazu kann der Abgaskrümmer aber auch mehrteilig ausgebildet sein, wobei die einzelnen Krümmerteile dann im fertig montierten Zustand fest miteinander verbunden sind und wenigstens eines der Krümmerteile Bestandteil des erfindungsgemäßen Funktionsmoduls bildet.

An dem Abgaskrümmer kann stromauf dem Leitungsabschnitt zur Abgasturbine ein weiterer Leitungsabschnitt vorgesehen, z.B. angegossen sein, über den die Abgase weiterer Zylinder der Brennkraftmaschine einleitbar sind. Das Funktionsmodul kann somit für Brennkraftmaschinen unterschiedlicher Zylinderzahl eingesetzt sein, wobei der Leitungsabschnitt die notwendige Kompatibilität herstellt.

Schließlich kann der Abgasturbolader ein Hochdruck-Turbolader einer Registeraufladung der Brennkraftmaschine mit einem Hochdrucklader und einem abgasseitig stromab liegendem Niederdrucklader sein.

Zwei Ausführungsbeispiele der Erfindung sind im Folgenden anhand der beigefügten, schematischen Zeichnung näher erläutert. Es zeigen:
- Fig. 1: in raumbildlicher Darstellung ein Funktionsmodul für eine Brennkraftmaschine für Nutzfahrzeuge, mit einem Abgasturbolader, einem Abgaskrümmer und einer Stützkonsole in einer Ansicht auf den Anschlussflansch des Abgaskrümmers;
- Fig. 2: das Funktionsmodul nach Fig. 1, in einer Ansicht von schräg oben auf den Abgasturbolader und die Aktuatoren zur Ladedruckregelung, zur Steuerung der Bremsklappe und des Abgasrückführventils;
- Fig. 3: einen Ansicht in einer Trennebene gemäß Linie III - III der Fig. 1 durch den zweiteiligen Abgaskrümmer und das Gehäuse der Abgasturbine mit Darstellung der Bremsklappe und der Drosselklappe des Abgas-Rückführventils;
- Fig. 4: einen Querschnitt entlang Linie IV - IV der Fig. 1 durch das Gehäuse der Abgasturbine und des Abgaskrümmers; und
- Fig. 5: in Einzeldarstellung einen alternativen, einteiligen Abgaskrümmer des Funktionsmoduls mit Teilschnitten im Bereich der Bremsklappe und der Drosselklappe des AbgasRückführventils.

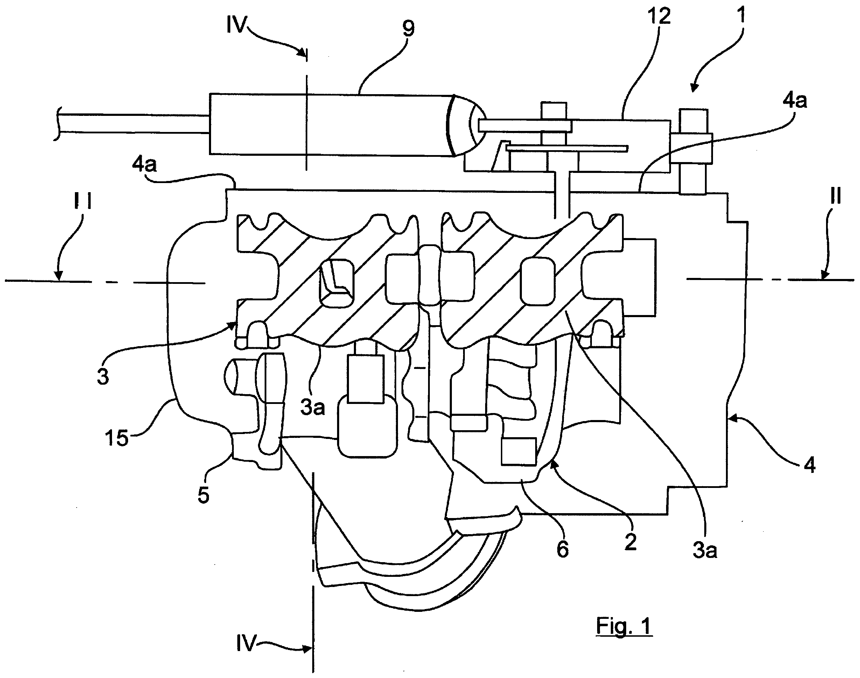

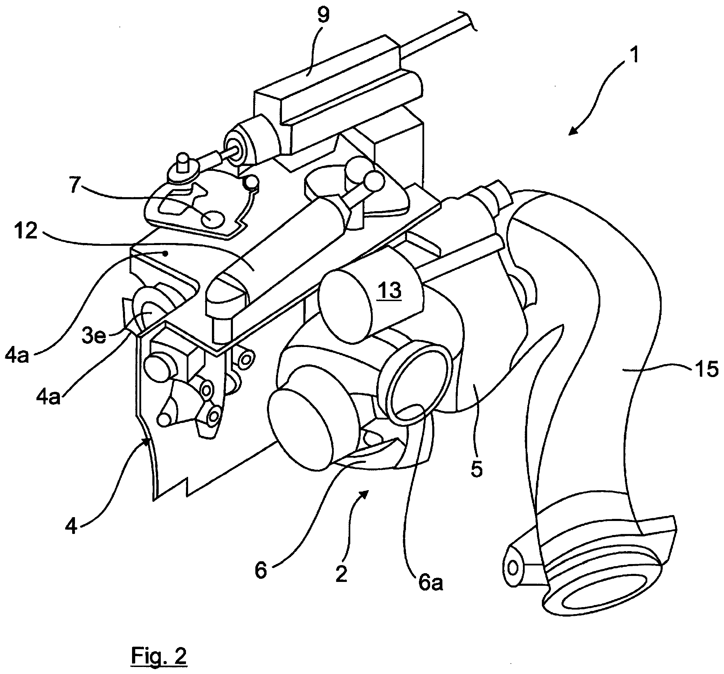

Die Fig. 1 und 2 zeigen in raumbildlicher Darstellung ein Funktionsmodul 1 für eine turboaufgeladene Reihen-Brennkraftmaschine mit einem ein Gussgehäuse aufweisenden Abgasturbolader 2 (soweit nicht anders beschrieben bekannter Bauart) und einem Abgaskrümmer 3 (bzw. einem Teilbereich eines mehrteiligen Abgaskrümmers), dessen Anschlussflansche 3a abgasseitig an einen Zylinderkopf für hier beispielhaft zwei Zylinder der Brennkraftmaschine (nicht dargestellt) angeschlossen sind.

Das Funktionsmodul 1 ist über eine nur äußerst schematisch dargestellte bzw. angedeutete Stützkonsole 4 an der Brennkraftmaschine abgestützt, wobei die Stützkonsole 4 zum Beispiel über nicht dargestellte Schraubverbindungen am Abgasturbolader 2 und/oder am Zylinderblock der Brennkraftmaschine befestigt ist.

Die Stützkonsole 4 bildet mit einem den Abgaskrümmer 3, vorzugsweise unter Belassung eines definierten Luftspalts, umschließenden Abschnitt 4a zugleich ein Wärmeschutzschild aus.

Der Abgasturbolader 2 setzt sich aus einer Abgasturbine 5 und einem Verdichter 6 zusammen, von denen nur die bevorzugt gusstechnisch hergestellten Gehäuse, nicht aber die Laufräder, deren Welle und Lagerungen dargestellt sind.

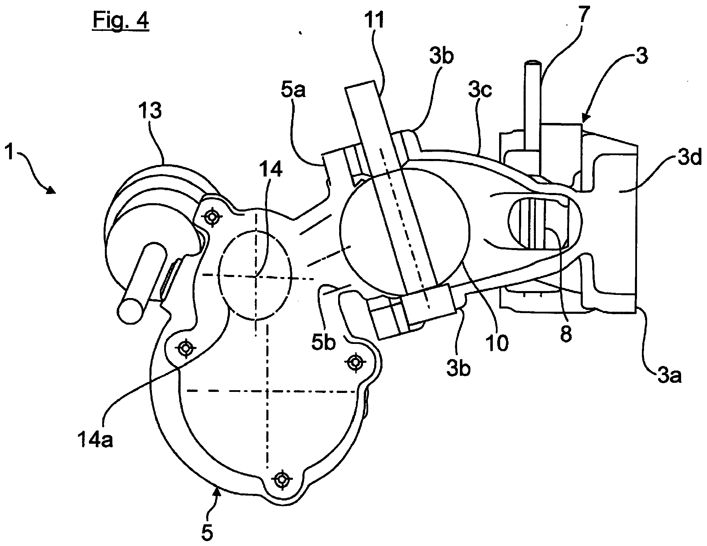

Die Abgasturbine bzw. deren Gehäuse 5 ist in einem ersten Ausführungsbeispiel über einen Einströmflansch 5a (Fig. 4) unmittelbar an einen Flansch 3b angeschlossen, der an einem gemeinsamen Leitungsabschnitt 3c des einteiligen Abgaskrümmers 3 ausgebildet ist. Der Leitungsabschnitt 3c (Fig. 4) schließt an die zwei in die Anschlussflansche 3a mündenden Abgaskanäle 3d des Abgaskrümmers 3 an.

An den Abgaskrümmer 3 kann ferner ein Anschlussstutzen 3e angeformt sein, an den eine nicht dargestellte Abgas-Rückführleitung zum Ansaugsystem der Brennkraftmaschine angeschlossen ist. In dem Anschlussstutzen 3e ist über eine Welle 7 eine Drosselklappe 8 als Abgas-Rückführventil gelagert, die mittels eines Aktuators 9 (Fig. 1 und 2) steuerbar ist und abhängig von Betriebsparametern der Brennkraftmaschine die Abgasrückführmenge bestimmt.

Des Weiteren ist in dem Leitungsabschnitt 3c des Abgaskrümmers 3 nahe dem Flansch 3b (Fig. 4) eine Bremsklappe 10 auf einer Welle 11 gelagert, die in Abhängigkeit von vorgegebenen Betriebsparametern, z.B. für einen aktiven Bremsleistungseingriff, für eine Kühlung der Injektordüse etc., mittels eines weiteren Aktuators 12 in eine offene oder mehr oder minder geschlossene Stellung zur Einsteuerung einer Motorbremswirkung verstellbar ist.

Sowohl die AGR- bzw. Drosselklappe 8 als auch die Bremsklappe 10 können somit in Abhängigkeit von definiert vorgegebenen Betriebsparametern der Brennkraftmaschine jeweils stufenlos verstellt bzw. eingestellt werden.

An dem Gehäuse 6 des Verdichters ist ferner ein Aktuator 13 zur Ladedruckregelung der Brennkraftmaschine befestigt, der eine innerhalb des Abgasturboladers 2 vorgesehene Bypassleitung mit einer Bypassklappe (bekannter Bauart, nicht dargestellt) steuert. Die Bypassleitung (die Fig. 4 zeigt in gestrichelten Linien 14 deren Mittelachse) verbindet in bekannter Weise die vom Verdichter 6 abgehende Ladedruckleitung 6a (Fig. 2) mit dem Turbineneinströmkanal 5b (Fig. 4) der Abgasturbine 5, so dass im Abregelfall über die in der Fig. 4 lediglich schematisch dargestellte bzw. angedeutete Bypassklappe 14a der Ladedruck der Brennkraftmaschine verringerbar ist. An die Abgasturbine 5 ist zudem die zentral abgehende Abgasleitung 15 angeschlossen, die mit dem weiteren Abgassystem der Brennkraftmaschine verbindbar ist.

Die Aktuatoren 9, 12, 13 können zum Beispiel elektrisch, hydraulisch, pneumatisch oder elektrohydraulisch betätigt sein und wirken über nicht weiter angeführte Gestänge bzw. Hebel oder dergleichen auf die Wellen 7, 11 der Drosselklappe 8 und der Bremsklappe 10 sowie auf die Bypassklappe 14a der Ladedruckregelung.

Die Aktuatoren 9, 12, 13 sind wie insbesondere aus den Fig. 1 und 2 ersichtlich ist an der Oberseite des Funktionsmoduls 1 bzw. oberhalb des Abgaskrümmers 3 in dessen Einbaulage an der Brennkraftmaschine in einer im Wesentlichen einheitlichen Horizontalebene angeordnet, wobei die Aktuatoren 9, 12 an der Stützkonsole 4 befestigt sind, während der Aktuator 13 für die Ladedruckregelung an dem Gehäuse des Verdichters 6 befestigt ist. Die Befestigungen sind zum Beispiel durch nicht näher dargestellte Schraubverbindungen gebildet.

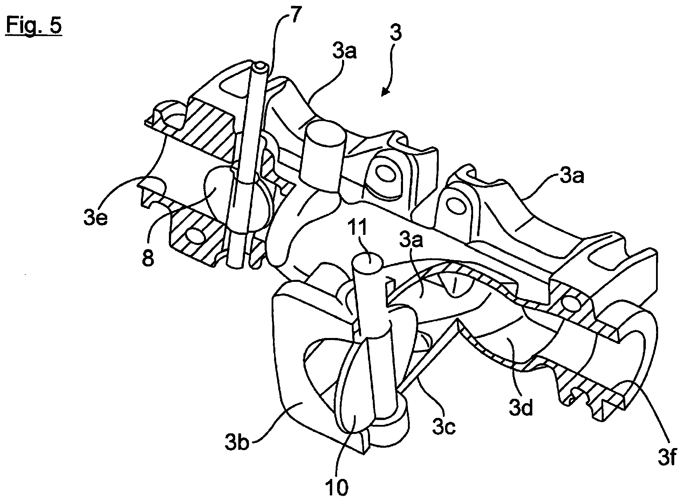

An dem Abgaskrümmer 3 (Fig. 5) ist ein weiterer, dem Anschlussstutzen 3e gegenüber liegender Leitungsabschnitt 3f angeformt, über den weitere Zylinder der Brennkraftmaschine bzw. deren Abgas in das Funktionsmodul 1 einleitbar sind. Es versteht sich, dass der Abgasturbolader 2 bzw. dessen Abgasturbine 5 auf die jeweiligen Abgasmassenströme ausgelegt sein müssen.

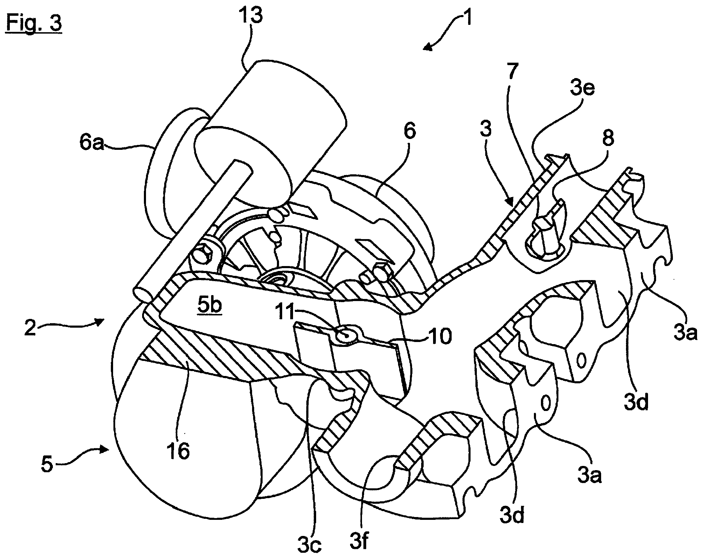

Die Fig. 3 zeigt eine alternative Ausgestaltung von Abgaskrümmer 3 und Abgasturbine 5, bei der die beiden Bauteile einstückig zusammengegossen oder gießtechnisch zweigeteilt zusammengegossen ausgeführt sind. Die Befestigungsflansche 5a und 3b können dadurch entfallen.

Die Fig. 3 zeigt hier lediglich die untere Hälfte der Abgasturbine 5 und des Abgaskrümmers 3, wobei im Falle einer gießtechnisch zweiteilig zusammengegossenen Variante die einheitliche, plane Trennfläche 16 z.B. in der Mittelachse der Leitungsabschnitte 3c, 3d, 3e, 3f des Abgaskrümmers 3 verläuft, so dass hier keine Hinterschnitte bei der Entformung vorliegen. Der obere Teil des Gehäuses der Abgasturbine 5 und des Abgaskrümmers 3 (nicht dargestellt) wäre dann ebenfalls ohne Hinterschnitte ausführbar. Das Bauteil kann aber auch, wie oben bereits erwähnt, insgesamt einstückig durch Gießen ausgebildet sein, so dass die Darstellung der Fig. 3 bei 16 dann lediglich die Schnittflächen zeigt.

Das Funktionsmodul 1 kann als autarke, separate Vormontageeinheit hergestellt werden, wobei die Steuerungsfunktionen der Aktuatoren 9, 12, 13 auf einem entsprechenden Prüfstand bereits vorab diagnostiziert und einjustiert werden können.

Sodann kann das Funktionsmodul 1 mit geringem Montageaufwand an der Brennkraftmaschine befestigt und die Aktuatoren 9, 12, 13 an ein elektronisches Motorsteuergerät und gegebenenfalls an hydraulische Steuereinrichtungen (nicht dargestellt) von oben gut zugänglich angeschlossen werden.

Abweichend von den Ausführungsbeispielen kann der Abgaskrümmer 3 ggf. auch ohne Abgasrückführventil 8 konzipiert sein. Der Abgasturbolader 2 des Funktionsmoduls 1 kann bei einer Registeraufladung der Brennkraftmaschine ein Hochdrucklader sein, an den stromab der Abgasturbine ein Niederdrucklader angeschlossen sein kann.

Wie ebenfalls bereits erwähnt, kann der Abgaskrümmer 3 grundsätzlich einstückig ausgebildet sein oder mehrteilig ausgebildet sein, wobei dann im letzteren Falle die einzelnen Krümmerteile entsprechend miteinander verbunden sind.

### BEZUGSZEICHENLISTE

- 1: Funktionsmodul
- 2: Abgasturbolader
- 3: Abgaskrümmer
- 3a: Anschlussflansche
- 3b: Flansch
- 3c: Leitungsabschnitt
- 3d: Abgaskanäle
- 3e: Anschlussstutzen
- 3f: Leitungsabschnitt
- 4: Stützkonsole
- 4a: Abschnitt
- 5: Abgasturbine
- 5a: Einströmflansch
- 5b: Einströmkanal
- 6: Verdichter
- 6a: Ladedruckleitung
- 7: Welle
- 8: Drosselklappe
- 9: Aktuator
- 10: Bremsklappe
- 11: Welle
- 12: Aktuator
- 13: Aktuator
- 14: Bypassleitung
- 14a: Bypassklappe
- 15: Abgasleitung
- 16: Trennfläche oder Schnittebene

## Patentansprüche

1. Funktionsmodul mit wenigstens einem Abgasturbolader und einem Abgaskrümmer für eine turboaufgeladene Brennkraftmaschine in Kraftfahrzeugen, wobei die Brennkraftmaschine eine Ladedrucksteuereinrichtung mit einer Bypassklappe, eine im Abgassystem angeordnete Bremsklappe zur Steuerung einer Motorbremswirkung aufweist, **dadurch gekennzeichnet, dass** die Bremsklappe (10) und die Bypassklappe (14a) in das als Montageeinheit ausgebildete Funktionsmodul (1) integriert sind.

2. Funktionsmodul nach Anspruch 1, **dadurch gekennzeichnet, dass** die Brennkraftmaschine ferner eine Abgasrückführeinrichtung mit einem Rückführventil (8) aufweist, das ebenfalls in das Funktionsmodul (1) integriert ist.

3. Funktionsmodul nach Anspruch 1 oder 2, **dadurch gekennzeichnet, dass** ferner eine Betätigungseinrichtung, insbesondere ein Aktuator (9, 12, 13), zur Betätigung der Bremsklappe (10) und/oder der Bypassklappe (14a) und/oder eines Rückführventils (8) einer Abgasrückführeinrichtung Bestandteil des Funktionsmoduls (1) ist, insbesondere die jeweiligen Aktuatoren (9, 12, 13) an das Funktionsmodul (1) angebaut sind.

4. Funktionsmodul nach einem der vorhergehenden Ansprüche, **dadurch gekennzeichnet, dass** an dem Abgasturbolader (2) eine Stützkonsole (4) vorgesehen ist, die zugleich ein Wärmeschutzschild (4a) für den Abgaskrümmer (3) bildet.

5. Funktionsmodul nach Anspruch 4, **dadurch gekennzeichnet, dass** die Stützkonsole (4) vom Abgaskrümmer (3) durch einen isolierenden Luftspalt getrennt und/oder beabstandet ist.

6. Funktionsmodul nach einem der vorhergehenden Ansprüche, **dadurch gekennzeichnet, dass** eine Betätigungseinrichtung, insbesondere ein Akuator (9, 12), für eine Abgasrückführung und/oder die Bremsklappe (10) in Einbaulage des Funktionsmoduls (1) an dessen Oberseite positioniert und an der Stützkonsole (4) befestigt ist.

7. Funktionsmodul nach einem der vorhergehenden Ansprüche, **dadurch gekennzeichnet, dass** eine Betätigungseinrichtung, insbesondere ein Aktuator (13), für die Ladedrucksteuerung am Verdichtergehäuse (6), bezogen auf die Einbaulage, an dessen Oberseite befestigt ist.

8. Funktionsmodul nach Anspruch 6 oder 7, **dadurch gekennzeichnet, dass** sämtliche Betätigungseinrichtungen, insbesondere Aktuatoren (9, 12, 13), im Wesentlichen in einer einheitlichen Horizontalebene oberhalb der Anschlussflansche (3a) des Abgaskrümmers (3) und der Stützkonsole (4) angeordnet sind.

9. Funktionsmodul nach einem der vorhergehenden Ansprüche, **dadurch gekennzeichnet, dass** das Abgas-Rückführventil durch eine Drosselklappe (8) gebildet ist, die in einem an den Abgaskrümmer (3) angeformten Anschlussstutzen (3e) angeordnet ist.

10. Funktionsmodul nach einem der vorhergehenden Ansprüche, **dadurch gekennzeichnet, dass** die Bremsklappe (10) nahe der Abgasturbine (5) des Abgasturboladers (2) in einen Leitungsabschnitt (3c) des Abgaskrümmers (3) eingesetzt ist.

11. Funktionsmodul nach einem der vorhergehenden Ansprüche, **dadurch gekennzeichnet, dass** die Bypassklappe (14a) in den Abgasturbolader (2) in einer die abgehende Ladedruckleitung (6a) des Verdichters (6) mit der Abgasturbine (5) verbindenden Bypassleitung (14) angeordnet ist.

12. Funktionsmodul nach einem der vorhergehenden Ansprüche, **dadurch gekennzeichnet, dass** das Gehäuse der Abgasturbine (5) und der Abgaskrümmer (3) jeweils durch separate Bauteile gebildet sind, die vorzugsweise über Anschlussflansche (5a, 3b) als Anschlussbereiche miteinander verbunden sind, oder dass das Gehäuse der Abgasturbine (5) und der Abgaskrümmer (3) durch ein einteilig hergestelltes Bauteil gebildet ist, oder dass das Gehäuse der Abgasturbine (5) und der Abgaskrümmer (3) dergestalt zweiteilig zusammengegossen ausgeführt sind, dass der Abgaskrümmer (3) eine in das Gehäuse der Abgasturbine (5) reichende, ebene Trennfläche aufweist, wobei die beiden Teile miteinander fest verbunden sind.

13. Funktionsmodul nach einem der vorhergehenden Ansprüche, **dadurch gekennzeichnet, dass** der Abgaskrümmer (3) einteilig oder mehrteilig ausgebildet ist, wobei im Falle eines mehrteilig ausgebildeten Abgaskrümmers (3) die einzelnen Krümmerteile miteinander verbunden sind und wenigstens eines der Krümmerteile Bestandteil des Funktionsmoduls bildet.

14. Funktionsmodul nach einem der vorhergehenden Ansprüche, **dadurch gekennzeichnet, dass** an dem Abgaskrümmer (3) stromauf eines zur Abgasturbine (5) führenden Leitungsabschnitts (3c) ein weiterer Leitungsabschnitt (3f) vorgesehen, insbesondere angegossen ist, über den die Abgase wenigstens eines weiteren Zylinders der Brennkraftmaschine einleitbar sind.

15. Funktionsmodul nach einem der vorhergehenden Ansprüche, **dadurch gekennzeichnet, dass** der Abgasturbolader (2) ein Hochdruck-Turbolader einer Registeraufladung der Brennkraftmaschine mit einem Hochdrucklader und einem abgasseitig stromab liegendem Niederdrucklader ist.

16. Kraftfahrzeug, insbesondere Nutzfahrzeug, mit einem Funktionsmodul nach einem oder mehreren der vorhergehenden Ansprüche.

## Claims

1. Functional module comprising at least one exhaust turbocharger and one exhaust manifold for a turbocharged internal combustion engine in motor vehicles, wherein the internal combustion engine has a boost pressure control device comprising a bypass flap, a brake flap for controlling an engine braking effect, which is arranged in the exhaust system, **characterized in that** the brake flap (10) and the bypass flap (14a) are integrated into the functional module (1) which is designed as an assembled unit.

2. Functional module according to Claim 1, **characterized in that** the internal combustion engine furthermore has an exhaust gas recirculation device comprising a recirculation valve (8), which is likewise integrated into the functional module (1).

3. Functional module according to Claim 1 or 2, **characterized in that** an actuating device, in particular an actuator (9, 12, 13), for actuating the brake flap (10) and/or the bypass flap (14a) and/or a recirculation valve (8) of an exhaust gas recirculation device is furthermore part of the functional module (1) and, in particular, the respective actuators (9, 12, 13) are mounted on the functional module (1).

4. Functional module according to one of the preceding claims, **characterized in that** a supporting bracket (4) is provided on the exhaust turbocharger (2), said bracket forming a heat shield (4a) for the exhaust manifold (3) at the same time.

5. Functional module according to Claim 4, **characterized in that** the supporting bracket (4) is separated and/or spaced apart from the exhaust manifold (3) by an insulating air gap.

6. Functional module according to one of the preceding claims, **characterized in that** an actuating device, in particular an actuator (9, 12), for an exhaust gas recirculation system and/or the brake flap (10) is positioned on the upper side of the functional module (1) in the installation position of the latter, and is secured on the supporting bracket (4).

7. Functional module according to one of the preceding claims, **characterized in that** an actuating device, in particular an actuator (13), for the boost pressure control system is secured on the compressor housing (6), on the upper side of the latter in relation to the installation position.

8. Functional module according to Claim 6 or 7, **characterized in that** all the actuating devices, in particular actuators (9, 12, 13), are arranged substantially in a single horizontal plane above the connection flanges (3a) of the exhaust manifold (3) and of the supporting bracket (4).

9. Functional module according to one of the preceding claims, **characterized in that** the exhaust gas recirculation valve is formed by a throttle flap (8), which is arranged in a connection stub (3e) formed on the exhaust manifold (3).

10. Functional module according to one of the preceding claims, **characterized in that** the brake flap (10) is inserted into a line segment (3c) of the exhaust manifold (3) close to the exhaust turbine (5) of the exhaust turbocharger (2).

11. Functional module according to one of the preceding claims, **characterized in that** the bypass flap (14a) is arranged in the exhaust turbocharger (2) in a bypass line (14) connecting the outgoing boost pressure line (6a) of the compressor (6) to the exhaust turbine (5).

12. Functional module according to one of the preceding claims, **characterized in that** the housing of the exhaust turbine (5) and the exhaust manifold (3) are each formed by separate components which are preferably connected to one another by connection flanges (5a, 3b) as connection regions, or **in that** the housing of the exhaust turbine (5) and the exhaust manifold (3) are formed by a component produced as a single part, or **in that** the housing of the exhaust turbine (5) and the exhaust manifold (3) are embodied as two parts cast together in such a way that the exhaust manifold (3) has a flat parting surface extending into the housing of the exhaust turbine (5), wherein the two parts are connected securely to one another.

13. Functional module according to one of the preceding claims, **characterized in that** the exhaust manifold (3) is of single-part or multi-part design, wherein, in the case of an exhaust manifold (3) of multi-part design, the individual manifold parts are connected to one another, and at least one of the manifold parts forms part of the functional module.

14. Functional module according to one of the preceding claims, **characterized in that** a further line segment (3f) is provided, in particular integrally cast, on the exhaust manifold (3) upstream of a line segment (3c) leading to the exhaust turbine (5), via which further line segment the exhaust gases from at least one further cylinder of the internal combustion engine can be introduced.

15. Functional module according to one of the preceding claims, **characterized in that** the exhaust turbocharger (2) is a high-pressure turbocharger of a staged pressure charging system for the internal combustion engine, comprising a high-pressure charger and a low-pressure charger situated downstream on the exhaust side.

16. Motor vehicle, in particular a commercial vehicle, having a functional module according to one or more of the preceding claims.

## Revendications

1. Module fonctionnel comprenant au moins un turbocompresseur à gaz d'échappement et un collecteur de gaz d'échappement pour un moteur à combustion interne turbocompressé dans des véhicules automobiles, dans lequel le moteur à combustion interne présente un dispositif de commande de la pression de suralimentation avec un clapet de dérivation, un clapet de freinage disposé dans le système de gaz d'échappement pour la commande d'un effet de freinage du moteur, **caractérisé en ce que** le clapet de freinage (10) et le clapet de dérivation (14a) sont intégrés dans le module fonctionnel (1) réalisé sous forme d'unité de montage.

2. Module fonctionnel selon la revendication 1, **caractérisé en ce que** le moteur à combustion interne présente en outre un dispositif de retour de gaz d'échappement avec une soupape de retour (8), qui est également intégrée dans le module fonctionnel (1).

3. Module fonctionnel selon la revendication 1 ou 2, **caractérisé en outre en ce qu'**un dispositif d'actionnement, en particulier un actionneur (9, 12, 13), pour l'actionnement du clapet de freinage (10) et/ou du clapet de dérivation (14a) et/ou d'une soupape de retour (8) d'un dispositif de retour de gaz d'échappement, est un composant du module fonctionnel (1), en particulier les actionneurs respectifs (9, 12, 13) sont montés sur le module fonctionnel (1).

4. Module fonctionnel selon l'une quelconque des revendications précédentes, **caractérisé en ce qu'**il est prévu sur le turbocompresseur à gaz d'échappement (2) une console de soutien (4), qui forme en même temps un bouclier de protection thermique (4a) pour le collecteur de gaz d'échappement (3).

5. Module fonctionnel selon la revendication 4, **caractérisé en ce que** la console de soutien (4) est séparée et/ou espacée du collecteur de gaz d'échappement (3) par une lame d'air isolante.

6. Module fonctionnel selon l'une quelconque des revendications précédentes, **caractérisé en ce qu'**un dispositif d'actionnement, en particulier un actionneur (9, 12), pour un retour de gaz d'échappement et/ou le clapet de freinage (10), est positionné dans la position de montage du module fonctionnel (1) sur le côté supérieur de celui-ci et est fixé à la console de soutien (4).

7. Module fonctionnel selon l'une quelconque des revendications précédentes, **caractérisé en ce qu'**un dispositif d'actionnement, en particulier un actionneur (13), pour la commande de la pression de suralimentation est fixé sur le corps de compresseur (6), sur le côté supérieur de celui-ci par rapport à la position de montage.

8. Module fonctionnel selon la revendication 6 ou 7, **caractérisé en ce que** tous les dispositifs d'actionnement, en particulier les actionneurs (9, 12, 13), sont disposés essentiellement dans un plan horizontal unique au-dessus de la bride de raccordement (3a) du collecteur de gaz d'échappement (3) et de la console de soutien (4).

9. Module fonctionnel selon l'une quelconque des revendications précédentes, **caractérisé en ce que** la soupape de retour de gaz d'échappement est formée par une vanne papillon (8), qui est disposée dans un embout de raccordement (3e) formé sur le collecteur de gaz d'échappement (3).

10. Module fonctionnel selon l'une quelconque des revendications précédentes, **caractérisé en ce que** le clapet de freinage (10) est installé à proximité de la turbine à gaz d'échappement (5) du turbocompresseur à gaz d'échappement (2) dans une partie de conduite (3c) du collecteur de gaz d'échappement (3).

11. Module fonctionnel selon l'une quelconque des revendications précédentes, **caractérisé en ce que** le clapet de dérivation (14a) est disposé dans le turbocompresseur à gaz d'échappement (2) dans une conduite de dérivation (14) reliant la conduite de pression de suralimentation sortante (6a) du compresseur (6) à la turbine à gaz d'échappement (5).

12. Module fonctionnel selon l'une quelconque des revendications précédentes, **caractérisé en ce que** le corps de la turbine à gaz d'échappement (5) et le collecteur de gaz d'échappement (3) sont formés respectivement par des composants séparés, qui sont assemblés l'un à l'autre par des brides de raccordement (5a, 3b) formant des régions de raccordement, ou **en ce que** le corps de la turbine à gaz d'échappement (5) et le collecteur de gaz d'échappement (3) sont formés par un composant fabriqué en une seule pièce, ou **en ce que** le corps de la turbine à gaz d'échappement (5) et le collecteur de gaz d'échappement (3) sont coulés ensemble en deux parties, de telle manière que le collecteur de gaz d'échappement (3) présente une face de séparation plane, qui s'étend jusque dans le corps de la turbine à gaz d'échappement (5), dans lequel les deux parties sont assemblées l'une à l'autre d'une façon fixe.

13. Module fonctionnel selon l'une quelconque des revendications précédentes, **caractérisé en ce que** le collecteur de gaz d'échappement (3) est réalisé en une partie ou en plusieurs parties, dans lequel, dans le cas d'un collecteur de gaz d'échappement (3) réalisé en plusieurs parties, les parties individuelles du collecteur sont assemblées les unes aux autres et au moins une des parties de collecteur forme un composant du module fonctionnel.

14. Module fonctionnel selon l'une quelconque des revendications précédentes, **caractérisé en ce qu'**il est prévu sur le collecteur de gaz d'échappement (3) en amont d'une partie de conduite (3c) menant à la turbine à gaz d'échappement (5) une autre partie de conduite (3f), en particulier moulée, par laquelle les gaz d'échappement d'au moins un autre cylindre du moteur à combustion interne peuvent être introduits.

15. Module fonctionnel selon l'une quelconque des revendications précédentes, **caractérisé en ce que** le turbocompresseur à gaz d'échappement (2) est un turbocompresseur à haute pression d'une suralimentation bi-étagée du moteur à combustion interne avec un compresseur à haute pression et un compresseur à basse pression situé en aval côté gaz d'échappement.

16. Véhicule automobile, en particulier véhicule utilitaire, doté d'un module fonctionnel selon une ou plusieurs des revendications précédentes.
